# EUROPÄISCHE PATENTSCHRIFT

(11) **EP 3 390 919 B1**
(45) Veröffentlichungstag und Bekanntmachung des Hinweises auf die Patenterteilung: **20.11.2024**
(21) Anmeldenummer: 16825364.9
(22) Anmeldetag: 16.12.2016
(51) Int. Cl.: F24D 5/02, F24F 3/00, F24F 13/078, F24F 5/00, F24F 3/056, F21V 33/00, G02B 6/00

(54) **SYSTEM UND VORRICHTUNG ZUM HEIZEN, KÜHLEN, BELÜFTEN UND BELEUCHTEN EINES INNENRAUMS**
SYSTEM AND DEVICE FOR HEATING, COOLING AND VENTILATING AND LIGHTING OF A ROOM
SYSTÈME ET DISPOSITIF POUR CHAUFFER, REFROIDIR ET VENTILER ET ÉCLAIRER UNE PIÈCE INTÉRIEURE

(30) Priorität: 17.12.2015 DE 102015225815
(43) Veröffentlichungstag der Anmeldung: 24.10.2018
(73) Patentinhaber: Viessmann Climate Solutions SE, 35108 Allendorf (DE)
(72) Erfinder: WENZEL, Bernd, 35444 Biebertal (DE)
(74) Vertreter: MERH-IP Matias Erny Reichl Hoffmann Patentanwälte PartG mbB
(86) Internationale Anmeldenummer: PCT/EP2016/081597
(87) Internationale Veröffentlichungsnummer: WO 2017/103220

(56) Entgegenhaltungen:
- EP-A1- 2 412 521
- WO-A1-2007/048194
- WO-A1-2012/126524
- WO-A1-2014/097805
- WO-A1-2015/107714
- CN-Y- 2 713 355
- DE-A1- 10 336 593
- DE-U1- 202008 003 864
- US-A1- 2014 355 248

## Beschreibung

Die vorliegende Erfindung betrifft ein System zum Beleuchten und zum Heizen und/oder Kühlen und/oder Belüften eines Raumes.

Die Gebrauchsmusterschrift DE 20 2010 006 457 U1 offenbart einen Heizkörper mit einem Strahlelement, in dem eine Heizflüssigkeit zirkuliert, und einer mit dem Strahlelement verbundenen Abdeckung, die eine Beleuchtungsanordnung mit mindestens einer Lichtquelle umfasst. Die Abdeckung kann eine geformte Platte aus durchsichtigem Material, zum Beispiel PMMA, umfassen.

Aus der europäischen Patentanmeldung EP 2 103 881 A2 ist ein Klimatisierungssystem für Räume bekannt, das aus mehreren Kassetten für Kassettenwände oder -decken besteht. Jede Kassette weist ein Klimatisierungsmodul mit einem Luftverteiler und einen von einem Fluid durchströmten Wärmetauscher auf, so dass im Betrieb des Klimatisierungsmoduls ein Wärmeaustausch zwischen dem durch den Wärmetauscher fließenden Fluid und der durch den Luftverteiler strömenden Luft stattfindet. Eine Steuereinrichtung regelt die Zufuhr von Luft und Fluid.

Die Gebrauchsmusterschrift DE 20 2008 003 864 U1 betrifft ein Klimatisierungssystem für Räume und ein in Kassetten einer Kassettenwand oder -decke integriertes Klimatisierungsmodul. Dabei umfasst jedes Klimatisierungsmodul einen Luftverteiler und einen von einem Fluid durchströmten Wärmetauscher. Der Wärmetauscher und der Luftverteiler sind in dem Klimatisierungsmodul derart zueinander angeordnet, dass im Betrieb des Klimatisierungsmoduls ein Wärmeaustausch zwischen durch den Luftverteiler strömender Luft und einem durch den Wärmetauscher strömenden Fluid stattfindet.

Die internationale Patentanmeldung WO 2012/126 524 A1 beschreibt ein modular aufgebautes System für den Innenraum eines Raums. Die Module können nebeneinander montiert werden, so dass eine zusammenhänge Oberfläche entsteht.

Die deutsche Patentanmeldung DE 103 36 593 A1 offenbart ein Belüftungssystem für ein Kraftfahrzeug.

Die Druckschrift EP 2 412 521 A1 offenbart einen beleuchteten Heizkörper aus Glas mit Leuchtfeldern, die in eine Verbundglasscheibe eingekoppeltes Licht nach außen reflektieren, emittieren oder streuen.

Der vorliegenden Erfindung liegt die Aufgabe zugrunde, ein gegenüber dem Stand der Technik verbessertes System zum Heizen und/oder Kühlen und/oder Lüften und/oder Beleuchten eines Raumes bereitzustellen. Insbesondere soll ein derartiges System bereitgestellt werden, das aus einzelnen genormten Modulen besteht, deren Anordnung an einer Wand und/oder einer Decke und/oder einem Boden eines Raumes besonderes flexibel ist und nachträglich verändert werden kann.

Die Lösung der Aufgabe gelingt durch ein System nach Anspruch 1
Erfindungsgemäß weist die Oberfläche des Klimamoduls eine Vielzahl von Streuzentren zum Streuen von Licht auf, wobei das Licht von Leuchtmitteln emittiert wird, die an den Randbereichen der Oberfläche oder mittig auf der Oberfläche angeordnet sind.

Die Klimamodule weisen jeweils eine ebene, dem Raum zugewandte Oberfläche auf, über die eine Wärmeübertragung mit der Raumluft stattfinden kann, so dass Wärme und/oder Kälte an den Raum abgegeben werden kann. Der Wärmeübertrag kann auch über Strahlung erfolgen.

Das erfindungsgemäße System kann nachträglich vor einer Wand aufgebaut werden, ohne dass Infrastrukturelemente, wie zum Beispiel hydraulische Leitungen oder Lüftungsleitungen, in der Wand vorhanden sein müssen beziehungsweise nachträglich eingebaut werden müssen. Das System kann parallel zu und vor einer Oberfläche einer Wand, einer Decke oder eines Bodens aufgebaut werden. Dabei bilden die Oberflächen der einzelnen Module eine im Wesentlichen zusammenhängende Oberfläche, die nicht nur für den Wärmeaustausch mit der Innenluft des Raumes sorgt, sondern auch optisch ansprechend und dekorativ sein kann.

Auch in den Fällen wenn in der vorliegenden Beschreibung jeweils nur von "einer Wand" oder "der Wand" eines Raumes die Rede ist, versteht es sich, dass die betreffende Aussage auch für Anwendungen an einer Decke oder auf einem Boden eines Raumes zutrifft.

Da die Klimamodule vor einer Wand aufgebaut und nicht in eine Wand eingebaut werden, können sie nachträglich und ohne großen Bauaufwand auch in Altbauten eingebaut werden. Zudem ist es möglich, die Anordnung der Klimamodule nachträglich zu ändern oder zu erweitern. Die Klimamodule können vorzugsweise lösbar an der Wand befestigt werden, damit die Anordnung der Klimamodule verändert werden kann.

Das erfindungsgemäße System umfasst eine Vielzahl von Klimamodulen, die an einer Wand des Raumes angeordnet werden können. Die Klimamodule können eine genormte Größe aufweisen, so dass sie einfach kombinierbar sind, um einen Teil, insbesondere einen Großteil der Wand damit abzudecken. Alternativ oder zusätzlich können Klimamodule auch auf dem Boden und/oder an der Decke des Raumes angeordnet werden.

Die Kontur der Klimamodule ist derart ausgebildet, dass sich durch Zusammensetzen mehrerer Klimamodule eine im Wesentlichen geschlossene Oberfläche bilden lässt. Hierzu sind beispielsweise eine rechteckige, dreieckige oder hexagonale Form oder auch eine Rautenform geeignet. Auch eine Kombination aus verschiedenen geometrischen Formen, ist möglich. Für die Herstellung und aufgrund der Tatsache, dass die meisten Innenräume von Gebäuden rechteckige Wände, Böden und Decken haben, ist es zweckmäßig, eine genormte rechteckige Form für die Klimamodule zu wählen.

Das erfindungsgemäße System weist mindestens ein Verteilermodul auf, das dafür ausgelegt ist, der Vielzahl von Klimamodulen ein fluides Trägermedium für Wärme und/oder Kälte bereitzustellen. Ferner kann mindestens ein Verteilermodul dazu ausgelegt sein, Frischluft an mindestens ein Klimamodul bereitzustellen. Dazu können in den Verteilermodulen hydraulische Leitungen für das fluide Trägermedium angeordnet sein, die als Vorlauf zu und als Rücklauf von den Klimamodulen dienen. Die Verteilermodule umfassen somit die Infrastrukturelemente, welche üblicherweise unter Putz in Wänden, Decken und/oder Böden verlegt werden.

Die Verteilermodule erlauben es, das erfindungsgemäße System so aufzubauen, dass eine Länge eines Vorlaufs beziehungsweise eine Länge eines Rücklaufs zwischen jedem der Vielzahl von Klimamodulen und einem Energieversorger im Wesentlichen gleich lang ist, so dass ein Strömungswiderstand des fluiden Trägermediums und/oder der Frischluft und/oder Abluft für jedes Klimamodul im Wesentlichen gleich groß ist.

Bei herkömmlichen Heizungs-, Klima- und/oder Lüftungsanlagen kann es vorkommen, dass ein Trägermedium auf dem Weg vom Heizkessel zu den einzelnen Heizkörpern sehr unterschiedliche Strömungswiderstände überwinden muss, wodurch der Volumenstrom durch die verschiedenen Heizkörper stark variieren kann. Hierdurch kann das Problem auftreten, dass einzelne Heizkörper nicht ausreichend mit Wärme versorgt werden können.

Um die Strömungswiderstände in einem herkömmlichen Heizungssystem auszugleichen, können aufwendige Berechnungen und/oder Messungen notwendig sein. Im Allgemeinen ist der Planungsaufwand sehr groß, wenn eine Unterversorgung einzelner Heizkörper vermieden werden soll.

In den erfindungsgemäßen Verteilermodulen kann die komplette Versorgungsinfrastruktur integriert werden. Durch eine vertikale Anordnung der Verteilermodule an der Wand kann erreicht werden, dass der Strömungswiderstand für jedes Klimamodul innerhalb eines tolerierbaren Bereichs liegt, ohne dass aufwändige Planung und/oder Berechnung notwendig ist. Bei einer solchen Anordnung kann ein Verteilermodul eine Vielzahl von Klimamodulen, die auf beiden Seiten des Verteilermoduls an der Wand angeordnet sind, mit dem fluiden Trägermedium, Frischluft und/oder elektrischem Strom versorgen und/oder entsprechende Rücklaufleitungen bereitstellen.

Die Vorlauf- und Rücklaufleitungen in den Verteilermodulen gehören zum sogenannten Primärkreis. Die Leitungen in den Klimamodulen gehören zum sogenannten Sekundärkreis. Die Verteilermodule sind so aufgebaut, dass sie die Leitungen des Primärkreises in einer möglichst einheitlichen Länge, und somit einem einheitlichen Strömungswiderstand, bereitstellen. Die hydraulischen Leitungen des Sekundärkreises können durch die Verwendung der Klimamodule ebenfalls einen einheitlichen Strömungswiderstand aufweisen.

Bei dem fluiden Trägermedium kann es sich um eine Flüssigkeit oder ein Gas handeln, das vorzugsweise eine hohe Wärmekapazität besitzt. Beispiele für ein flüssiges Trägermedium umfassen Wasser, das aufgrund seiner hohen spezifischen Wärmekapazität und guten Verfügbarkeit besonders gut geeignet ist, Salz-Wasser-Lösungen, Alkohol-Wasser-Lösungen oder Öle sowie in besonderen Anwendungen auch Salzschmelzen oder flüssige Metalle. Das Trägermedium kann auch ein Gas oder Gasgemisch (z.B. Luft) sein. Insbesondere könnte vorgewärmte oder abgekühlte Luft zum Lüften und Heizen oder Kühlen des Raumes verwendet werden.

Die Oberfläche der Klimamodule besteht vorzugsweise aus einem Material, dessen Wärmeleitkoeffizient möglichst hoch ist, so dass ein optimaler Wärmeaustausch mit der Luft des Raumes stattfinden kann. Beispielsweise kann die Oberfläche aus einem Metall, einer Metalllegierung, zum Beispiel Aluminium, einer Aluminiumlegierung, Stahl, Edelstahl, Messing oder Kupfer bestehen. Abgesehen von der guten Wärmeleitfähigkeit sind Metalle auch sehr gut formbar. Eine möglichst ebene Oberfläche kann somit unter Verwendung bekannter Fertigungstechniken hergestellt werden. Vorzugsweise ist die Oberfläche aus einem einstückigen Metallblech gefertigt. Ein weiterer Vorteil einer Metalloberfläche ist, dass sich darin auf einfache Weise Öffnungen für eine Lüftung einbringen lassen. Metallbleche werden auch bei herkömmlichen Heizkörpern vielseitig verwendet und weisen eine Vielzahl von Vorteilen auf.

Die Oberfläche kann eine Vielzahl von Öffnungen, zum Beispiel eine Vielzahl kleiner Löcher aufweisen, um Frischluft zum Lüften des Raumes an den Raum abzugeben. Alternativ oder zusätzlich können die Öffnungen auch dazu dienen Luft aus dem Raum abzuführen, so dass die Klimamodule auch eine Funktion als Abzug ausführen können. Die Öffnungen können dementsprechend Lufteinlässe und/oder Luftauslässe sein. Die Klimamodule können somit für einen aktiven Luftaustausch in einem Raum sorgen, wobei die Temperatur der Raumluft konstant bleiben kann. Ferner können die Klimamodule dazu ausgelegt sein, eine Umluftfunktion bereitzustellen, so dass ein Wärmeaustausch zwischen Raumluft und den Heiz- und/oder Kühlkreisen verbessert werden kann, wobei kein aktiver Luftaustausch stattfinden muss.

Die Klimamodule weisen hydraulische Heizkreise und/oder Kühlkreise und/oder Lüftungskanäle auf, wobei die Lüftungskanäle mit der Vielzahl von Öffnungen strömungsverbunden sind. Die Heizkreise und/oder Kühlkreise sind mit der raumzugewandten Oberfläche der Klimamodule in Wärmekontakt, so dass ein Wärmeübertrag zwischen dem Trägermedium und der Oberfläche stattfinden kann. Die Heizkreise und/oder Kühlkreise können zum Beispiel mäanderförmig entlang der Oberfläche angeordnet sein. Hiermit kann ein besonders guter Wärmeübertrag zwischen Trägermedium und Oberfläche des Klimamoduls erreicht werden.

Das System umfasst eine Steuereinrichtung, welche dafür ausgelegt ist, eine zugeführte Wärmemenge und/oder Kältemenge und/oder Frischluftmenge und/oder Abluftmenge von und/oder zu den Klimamodulen zu steuern. Die Menge kann beispielsweise über die Regelung eines Flusses gesteuert werden. Ein Fluss bezeichnet im Folgenden allgemein einen Flüssigkeits-, Luft-, Gas- und/oder elektrischen Strom. Insbesondere kann die Steuereinrichtung fernsteuerbar sein. Die Steuereinrichtung kann dafür ausgelegt sein, zum Steuern des Systems Steuerbefehle an die Verteilermodule zu senden.

Die Steuereinrichtung ermöglicht eine koordinierte Steuerung der Klimamodule über die Verteilermodule. Die Sekundärkreise des Systems können vorzugsweise über die Steuereinrichtung automatisch geregelt werden und dabei in einem optimalen Zustand betrieben werden. Somit kann das System besonders effizient betrieben werden. Durch eine Kombination der Steuereinrichtung mit moderner Kommunikationstechnik kann zudem eine Fernsteuerung des Systems bewirkt werden, die beispielsweise über das Internet, insbesondere auch unter Verwendung einer Steueranwendung auf einem mobilen Endgerät, erfolgen kann.

Die Verteilermodule können hydraulische Kupplungen aufweisen, über die eine lösbare Verbindung zu Klimaelementen hergestellt werden kann, um die Klimaelemente mit dem fluiden Trägermedium für Wärme und/oder Kälte und/oder Frischluft zu versorgen. Die hydraulischen Kupplungen können jeweils mit Vorlaufleitungen und/oder Rücklaufleitungen in den Verteilermodulen in Strömungsverbindung stehen.

Vorzugsweise können über die hydraulischen Kupplungen im Raum stehende beheizbare und/oder kühlbare Möbel (zum Beispiel eine Couch, ein Tisch oder ein Bett) angeschlossen werden. Dadurch können vom Nutzer bestimmte Raumbereiche (zum Beispiel ein Arbeitsplatz, eine Dusche, eine Couch oder ein Bett) gezielt mit beheizt oder auch gekühlt werden. Außerdem können vorprogrammierbare, tageszeitenabhängige Heizszenarien realisiert werden.

Die Kupplungen können eine veränderbare und/oder erweiterbare Anordnung der Klimamodule an der Wand und/oder an der Decke und/oder am Boden ermöglichen. Die Verteilermodule können Leitungen für das fluide Trägermedium, beispielsweise Wasserleitungen, aufweisen. Wenn das Trägermedium zum Heizen und Kühlen des Raumes geeignet ist, dann können jeweils eine Vorlaufleitung und eine Rücklaufleitung ausreichend sein. Wird aber zum Heizen und Kühlen jeweils ein unterschiedliches Trägermedium verwendet, so kann das Verteilermodul jeweils getrennte Vorlaufleitungen und Rücklaufleitungen aufweisen.

Zusätzlich zu den hydraulischen Kupplungen können die Verteilermodule auch Steckdosen für elektrischen Strom aufweisen, die mit elektrischen Leitungen in den Verteilermodulen verbunden sind. Die Steckdosen können über die Steuereinrichtung regelbar beziehungsweise schaltbar sein.

Ferner können die Verteilermodule Frischluftleitungen und/oder Abluftleitungen aufweisen. Außerdem können in den Verteilermodulen Stromleitungen integriert sein. Für alle Leitungen können die Verteilermodule Schnittstellen (Kupplungen) aufweisen, über die die Klimamodule und/oder weitere anschließbare Möbel und/oder andere Vorrichtungen über entsprechende passende Gegenschnittstellen (Kupplungen) mit dem fluiden Trägermedium, Frischluft und/oder Strom versorgt werden können. Die Kupplungen können zum Beispiel mit einem Bajonettverschluss oder als Steckkupplungen mit passenden (abgedichteten) Stutzen ausgeführt sein, um ein schnelles und sicheres Verbinden zu ermöglichen.

Um einen Fluss durch die Vorlaufleitungen beziehungsweise Rücklaufleitungen zu regeln, weisen die Klimamodule Ventile auf. Die Ventile werden durch die Steuereinrichtung geregelt.

Die Ventile können schaltbar sein, so dass sie einen Fluss zulassen (Ein-Stellung) oder verhindern (Aus-Stellung) oder sie können einen Strom in einer Vielzahl von Stufen oder auch stufenlos Regeln. Die Ventile können beispielsweise Proportionalventile sein. Insbesondere können die Ventile als schaltbare Drei-Wege-Ventile ausgeführt sein. Jedes Drei-Wege-Ventil kann separat schaltbar sein. Über die Drei-Wege-Ventile können einzelne Klimamodule beziehungsweise einzelne Leitungen in einem Klimamodul mit einem Fluss versorgt werden.

Zusätzlich zu den Ventilen können die Verteilermodule und/oder die Klimamodule Einrichtungen zum Regeln eines Flusses des fluiden Trägermediums und/oder zum Regeln eines Flusses der Frischluft durch das Verteilermodul aufweisen. Eine solche Einrichtung kann beispielsweise als drehzahlregulierte Umwälzpumpe ausgeführt sein, die beispielsweise über die Steuereinrichtung regelbar sein kann. Vorzugsweise weisen alle Klimamodule separat regelbare Umwälzpumpen in den Heiz- und/oder Kühlkreisläufen auf, wobei eine Zufuhr des Trägermediums über die Vorlauf- und/oder Rücklaufleitungen von den Verteilermodulen über schaltbare Dreiwege-Ventile geregelt wird.

Die Klimamodule und/oder die Verteilermodule können jeweils separat regelbare Gebläsepumpen beziehungsweise Ventilatoren aufweisen. Hierdurch kann eine zugeführte Frischluftmenge und/oder eine abgeführte Abluftmenge geregelt werden. Alternativ können die Gebläsepumpen oder Ventilatoren dafür ausgelegt sein einen Umluftstrom bereitzustellen, der für einen verbesserten Wärmeaustausch zwischen Raumluft und Klimamodul sorgt, ohne einen aktiven Austausch der Raumluft zu bewirken.

Zusätzlich können die Verteilermodule und/oder die Klimamodule Rückschlagventile (beziehungsweise Dioden zum Vorgeben einer Richtung des elektrischen Stroms) aufweisen, um dem Fluss des fluiden Trägermediums und/oder dem Luftstrom eine bestimmte Fließrichtung vorzugeben.

Die Steuereinrichtung ist dafür ausgelegt, die Wärmemenge und/oder Kältemenge und/oder Frischluftmenge und/oder Abluftmenge für jedes Klimamodul separat zu regeln. So kann je nach Bedarf für ein bestimmtes Klimamodul eine individuell regelbare Wärmemenge und/oder Kältemenge und/oder Frischluftmenge eingestellt werden.

Das erfindungsgemäße System kann raumweise und auch nachträglich und/oder parallel zu bereits bestehenden Heizsystemen oder Klimaanlagen aufgebaut und betrieben werden. Ein weiterer Vorteil gegenüber konventionellen Unterputz-Wandheizsystemen besteht darin, dass das erfindungsgemäße System vor der Wand (beziehungsweise unter der Decke und/oder über dem Boden) umgebaut und oder umarrangiert werden kann. Somit wird ermöglicht, dass das System auf eine geänderte Raum- und/oder Wandnutzung vom Anwender angepasst werden kann. Hierzu können die Klimamodule ohne Unterputzarbeiten an den Wänden und/oder an der Decke und/oder am Boden neu platziert, entfernt und/oder hinzugefügt werden. Hierzu können an der Wand spezielle Befestigungsmittel, beispielsweise in Form von Schienen, angebracht werden, an denen die Klimamodule lösbar befestigt werden können.

Der modulare Aufbau des Systems mit vorgefertigten Klimamodulen kann Planung, Berechnung und Montage beim Einbauen eines solchen Systems, insbesondere auch bei einem nachträglichen Einbau und/oder einer Bestandssanierung, vereinfachen. Im Falle eines Neubaus, insbesondere mit fertig vorgefertigten Wandelementen, kann das System bereits vor der Endmontage eingebaut werden. Dadurch kann eine höhere Fertigungstiefe beim Haushersteller erzielt werden, wodurch auch eine Zeit- und Kostenreduzierung bei der Heizungsendmontage durch Handwerker auf der Baustelle erreicht werden kann.

Das System kann ferner dazu ausgelegt sein, innerhalb eines Raumes mindestens drei Klimazonen bereitzustellen, in denen eine jeweils unabhängig voneinander einstellbare Wärmemenge und/oder Kältemenge und/oder Frischluftmenge bereitgestellt wird. Die drei Klimazonen können beispielsweise nach einer Höhe im Raum eingestellt werden. So kann etwa eine Fußebene, eine Sitzebene und eine Kopfebene unabhängig voneinander geregelt werden. Eine solche Einteilung in Klimazonen nach Ebenen kann insbesondere deshalb vorteilhaft sein, da warme Luft nach oben zur Decke des Raumes steigt und kalte Luft nach unten zum Boden des Raumes absinkt. Durch das Einstellen der Klimazonen, kann eine gleichmäßigere Verteilung der Wärme in einem Raum erreicht werden. Ferner kann die Einteilung in Zonen auf die Gegebenheiten im Raum angepasst sein. Bereiche, an denen sich Personen im Raum besonders häufig aufhalten können bevorzugt mit Wärme und/oder Kälte und/oder Frischluft versorgt werden.

Die Oberfläche der Klimamodule weist eine Vielzahl von Streuzentren auf. Die Streuzentren dienen zum Streuen von Licht, das von Leuchtmitteln emittiert wird, die an einem Randbereich der Oberfläche des Klimamoduls angeordnet sein können und die Oberfläche möglichst homogen ausleuchten. Alternativ oder zusätzlich können die Leuchtmittel auch mittig auf der Oberfläche angeordnet sein und ihr Licht radial nach außen abgeben und dabei die Oberfläche des Klimamoduls möglichst homogen ausleuchten.

Die Streuzentren können im einfachsten Fall als Oberflächenrauheit durch eine geeignete Oberflächenbehandlung hergestellt werden. Erfindungsgemäß sind die Streuzentren als Mikrostrukturen in oder auf der Oberfläche ausgebildet, die ein diffuses Streuen des von den Leuchtmitteln emittierten Lichts in den Raum hinein bewirken. Die Streuzentren sind Mikroprismen, Mikroprismen-Arrays, Mikrolinsen und/oder Mikrolinsen-Arrays. Die Streuzentren können auf einem Teil oder auf der gesamten Oberfläche des Klimamoduls angeordnet sein. Die Streuzentren können entweder direkt in der Oberfläche eingearbeitet sein, als dünne Folie aufgeklebt sein oder auch auf der Oberfläche aufgedampft sein. Die reflektierende Mikrostruktur auf der Oberfläche des Heizflächensystems kann schrägwinklig und gebündeltes auf die Struktur einfallendes Licht homogen streuen und in den Raum projizieren.

Ein direktes Einarbeiten der Streuzentren in das Material der Oberfläche, beispielsweise durch Ätzverfahren, Erodierverfahren, Laserbearbeitung oder andere geeignete Oberflächenbearbeitung. hat den Vorteil, dass hierdurch eine Wärmeleitfähigkeit der Oberfläche nicht beeinträchtigt wird. Dies ermöglicht es, dass dieselbe Oberfläche zum Streuen von (sichtbarem) Licht und zum Wärmeübertrag, auch durch Abstrahlung von Wärmestrahlung, nutzbar gemacht wird. Insbesondere kann hierdurch der Einsatz von schlechten Wärmeleitern wie Plexiglas- und/oder Acrylglas-Elementen gänzlich vermieden werden.

Die Leuchtmittel bestehen vorzugsweise aus einer Vielzahl von Leuchtdioden, die beispielsweise rotes und/oder blaues und/oder grünes (RGB) und/oder weißes und/oder Schwarz- (UV) Licht abgeben können. Weißes Licht kann auch durch Mischen von rotem, blauen und grünem Licht erzeugt werden. Bei Verwendung von Leuchtdioden in rot, blau und grün (RGB) können mittels Farbmischung beliebige Farbtöne im gesamten Farbspektrum erzielt werden.

Die Leuchtmittel sind vorzugsweise wasserdicht versiegelt, so dass sie auch für den Einsatz in Nassräumen, wie zum Beispiel in einem Badezimmer, geeignet sind. Die Leuchtmittel sind in vorteilhafter Weise durch konstruktive Maßnahmen thermisch von der Oberfläche entkoppelt. Insbesondere wenn die Oberfläche zum Heizen verwendet wird kann hierdurch die Lebensdauer der Leuchtmittel erhöht werden. Die (Infrarot-) Wärmeabstrahlung der Oberfläche der Klimamodule wird durch diese Konstruktion nicht behindert, sondern kann hierdurch optimiert werden.

Die Beleuchtung eines Klimamoduls kann dazu ausgelegt sein, den jeweiligen Zustand des Moduls optisch anzuzeigen. So kann das Klimamodul beispielsweise Rottöne zum Anzeigen eines Heizzustands und/oder Blautöne zum Anzeigen eines Kühlzustands verwenden. Durch eine frei regelbare RGB-Farbmischung kann auch eine indirekte Raumbeleuchtung in nahezu beliebig wählbaren Farben erzielt werden. An der Decke angeordnete Klimamodule können auch Leuchtmittel umfassen, die weißes Licht abgeben und eine homogene Raumbeleuchtung bewirken.

Ferner können die Leuchtmittel auch derart angesteuert werden, dass Farbverläufe auf den Oberflächen der Klimamodule darstellbar sind. Die Farbverläufe können sich auch über mehrere Klimamodule in koordinierter Weise erstrecken. Dazu kann die Steuereinrichtung erkennen wie viele Klimamodule in welcher Anordnung an Wänden, Decke und/oder Boden angebracht sind. Alternativ kann die Anordnung der Klimamodule konfiguriert werden. Beispielsweise können der Natur nachempfundene Farbverläufe an den Wänden und/oder an der Decke abgebildet werden. Im abendlichen Heizbetrieb können zum Beispiel gedämpfte Rottöne, die einem Sonnenuntergang nachempfunden sind, angezeigt werden. Am Morgen können zum Beispiel helle Blau-Weiß-Kombinationen als Lichtdusche dargestellt werden. In einem Arbeitsbereich kann eine möglichst gleichmäßige helle Ausleuchtung bereitgestellt werden.

Außerdem kann eine bewegungsaktivierte, gedimmte Nachtbeleuchtung in der Fußzone realisiert werden, die den Nutzer bei der Bewegung durchs Haus begleitet und dabei einen Weg in gedämpftem, zum Beispiel Schwarz-, Licht ausleuchtet.

Die Leuchtmittel können ferner Prismen und/oder Linsen aufweisen, um das von ihnen emittierte Licht möglichst homogen auf die Oberfläche der Klimamodule zu lenken. Beispielsweise können die Prismen und/oder Linsen das Licht unter einem Winkel von weniger als 20 Grad auf die Streuzentren der Oberfläche ablenken.

Ferner können Parabolreflektoren hinter den Leuchtmitteln angeordnet sein, um das Licht auf die Oberfläche der Klimamodule zu richten. Dabei kann eine Fokussierung beziehungsweise Kollimation des Lichtes erfolgen. Ferner können Fresnel-Linsen vor den Leuchtmitteln eine Lichtbündelung und eine gerichtete Projektion der Lichtstrahlen auf die Oberfläche der Klimamodule mit den Streuzentren bewirken. Die Leuchtmittel sind vorzugsweise durch eine entsprechende mechanische Konstruktion derart mit der Oberfläche verbunden, dass die beim Betrieb der Leuchtmittel entstehende Wärme effektiv abgeführt wird.

Die Oberfläche der Klimamodule ist vorzugsweise aus einem Material mit einem Wärmeleitkoeffizienten von mindestens 50 W/(m K) gefertigt. Hierzu kann wie oben beschrieben vorzugsweise ein metallisches Material oder eine Metalllegierung verwendet werden. Besonders geeignet ist beispielsweise Aluminium mit einem Wärmeleitkoeffizienten von über 200 W/(m K).

### Kurzbeschreibung der Figuren

Weitere vorteilhafte Ausgestaltungen werden nachfolgend anhand eines in den Zeichnungen dargestellten Ausführungsbeispiels, das hilft Einzelheiten der Erfindung zu verstehen, näher beschrieben.

Es zeigen schematisch:
- **Figur 1**: eine Explosionsansicht eines Systems zum Heizen und Belüften eines Raumes mit zwölf Klimamodulen und drei Verteilermodulen zum Anordnen an einer Wand des Raumes.
- **Figur 2**: ein System zum Heizen und Belüften eines Raumes mit acht Klimamodulen und drei Verteilermodulen.
- **Figur 3**: ein System zum Heizen und Belüften eines Raumes mit acht Klimamodulen und drei Verteilermodulen.
- **Figur 4**: eine Detailansicht, die einen Heizungskreislauf in einem Verteilermodul und einem Klimamodul illustriert.
- **Figur 5**: eine Detailansicht, die einen Lüftungskreislauf in einem Verteilermodul und Klimamodulen illustriert.
- **Figur 6**: ein Klimamodul mit Leuchtelementen und Streuzentren zum Beleuchten eines Raumes.
- **Figur 7**: eine Seitenansicht eines Klimamoduls, die ein Befestigen des Klimamoduls an einer Wand illustriert.
- **Figur 8**: ein beheizbares Bett.
- **Figur 9**: einen beheizbaren Arbeitsplatz.

### Ausführliche Beschreibung von Ausführungsbeispielen

Bei der nachfolgenden Beschreibung bezeichnen gleiche Bezugszeichen gleiche oder vergleichbare Komponenten.

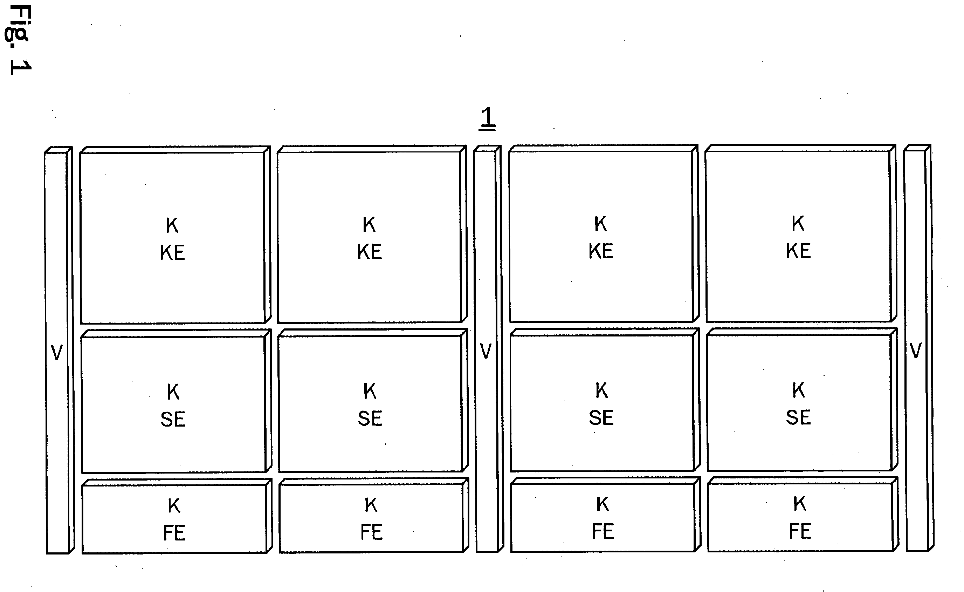

Figur 1 zeigt ein Ausführungsbeispiel eines erfindungsgemäßen Systems 1 zum Heizen und Belüften eines Raumes mit zwölf Klimamodulen K und drei Verteilermodulen V ist zur besseren Übersicht in Explosionsdarstellung gezeichnet. Das Beispiel zeigt eine Anordnung, die eine Wand eines Raumes vollständig bedeckt. Hierzu weist das System 1 zwei Eck-Verteilermodule V auf und ein mittiges Verteilermodul V. Die Klimamodule K sind in drei Zonen aufgeteilt: eine Kopfebene KE, eine Sitzebene SE und eine Fußebene FE, die unabhängig voneinander geregelt werden können. In der Explosionsdarstellung sind die einzelnen Module voneinander beabstandet gezeichnet. In einem eingebauten Zustand binden die Module eine zusammenhängende Oberfläche.

An die Eck-Verteilermodule V können weitere Klimamodule K in rechtem Winkel zu den dargestellten Klimamodulen K angeschlossen werden, so dass die gesamte Innenwand eines Raumes komplett mit Klimamodulen ausgekleidet werden könnte. Für Räumen, die einen nicht-rechteckigen Grundriss aufweisen, können die Verteilermodule für die Raumecken auf die jeweiligen Gegebenheiten angepasst werden, so dass auch Winkel von weniger als 90 Grad beziehungsweise größer als 90 Grad abgedeckt werden können.

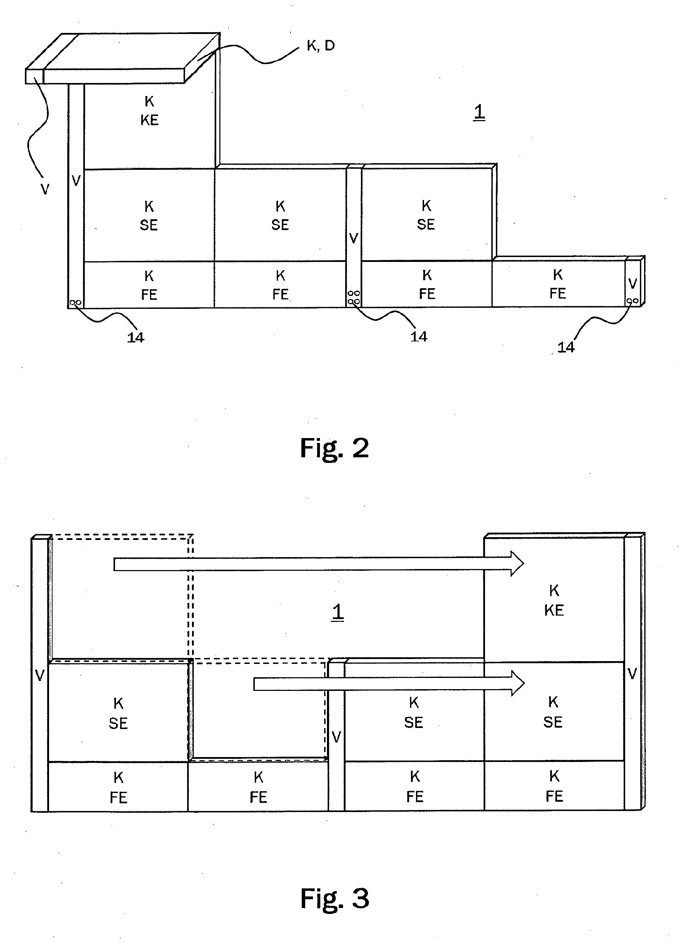

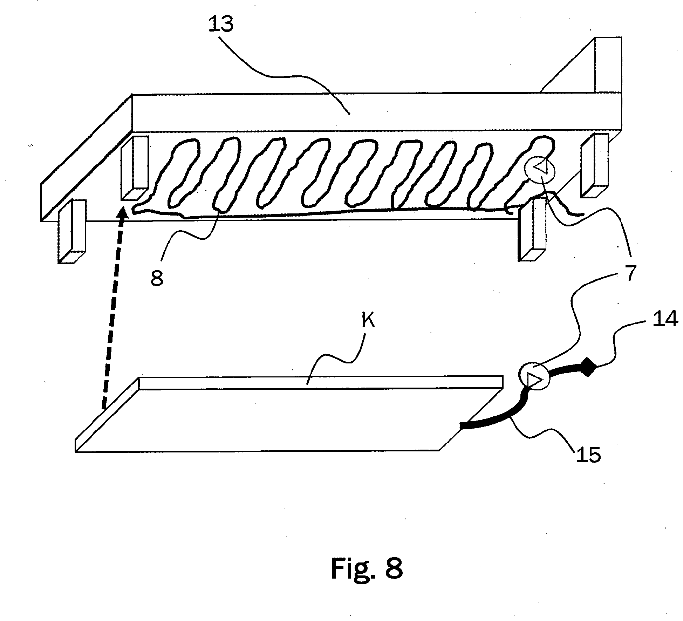

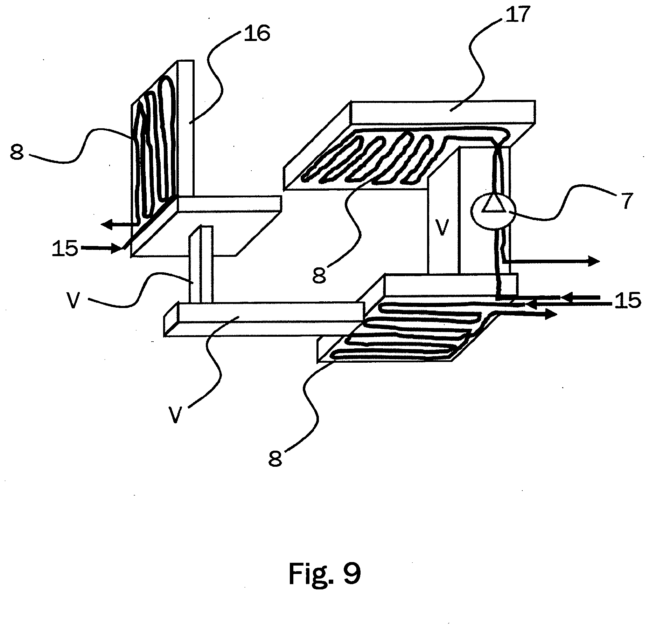

Figur 2 zeigt ein weiteres Ausführungsbeispiel eines erfindungsgemäßen Systems 1, das ähnlich wie jenes in Figur 1 aufgebaut ist, aber eine auf spezielle Begebenheiten des betreffenden Raumes angepasste flächige Anordnung der Klimamodule K an der Wand aufweist. Eine solche Anordnung kann beispielsweise bei Vorhandensein von Fenstern oder Möbeln oder einem Fernseher an der Wand oder bei einer Dachschräge vorteilhaft sein. Das System 1 gemäß dem zweiten Ausführungsbeispiel weist zudem ein Klimamodul K auf, das an der Decke D des Raumes angeordnet ist. Ein Verteilermodul V ist entlang der Decke D angeordnet, um das Klimamodul K an der Decke D zu versorgen. Ferner weisen die Verteilermodule V an einem Bereich in der Nähe des Bodens jeweils mehrere Kupplungen 14 auf. Diese Kupplungen K können hydraulische Kupplungen zum Anschließen weiterer Klimamodule K sein, die beispielsweise im Raum angeordnet werden können. An den Kupplungen können auch beheizbare und/oder kühlbare Möbel angeschlossen werden. Ausführungsbeispiele solcher Möbel sind in den Figuren 8 und 9 dargestellt. Wenigstens einige der in Figur 2 gezeigten Kupplungen 14 können auch elektrische Steckdosen und/oder geeignete Anschlüsse zum Steuern des Systems oder von Systemkomponenten sein. Hierzu können beispielsweise USB-Anschlüsse bereitgestellt werden. Ferner können auch andere Infrastruktur-Anschlüsse, wie zum Beispiel Internet-Anschlüsse, Telefonanschlüsse und/oder andere Schnittstellen bereitgestellt werden.

Ein drittes Ausführungsbeispiel eines erfindungsgemäßen Systems 1 ist in Figur 3 dargestellt. Die Figur 3 illustriert, wie eine nachträgliche Änderung der Anordnung der Klimamodule K erfolgen kann. Hier werden zwei Klimamodule K von links nach rechts entlang der Wand bewegt und neu platziert. Dies kann dann vorteilhaft sein, wenn Wandflächen anders genutzt werden sollen. Im Gegensatz zu fest in der Wand verbauten Flächenheizsystemen ist somit durch das System 1 eine viel höhere Flexibilität der Raumnutzung gegeben.

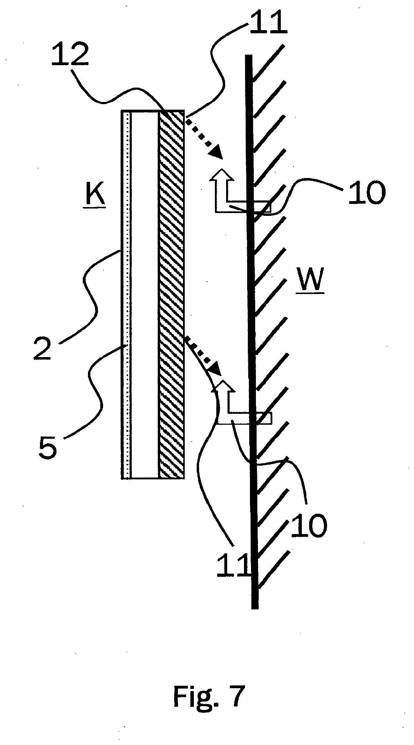

Die Befestigung der Klimamodule K an der Wand W erfolgt zum Beispiel mittels Wandhaken oder an Schienen (siehe auch Figur 7). Untereinander und mit den Verteilermodulen verbunden sind die Klimamodule über lösbare Kupplungen wie sie beispielsweise in ähnlicher Weise auch bei Solarthermieelementen verwendet werden. Zusätzliche Stabilität erhält das System 1 durch die vertikal angeordneten Verteilerbalken V. Die vertikalen Verteilerbalken sind vorzugsweise fest an der Wand W montiert.

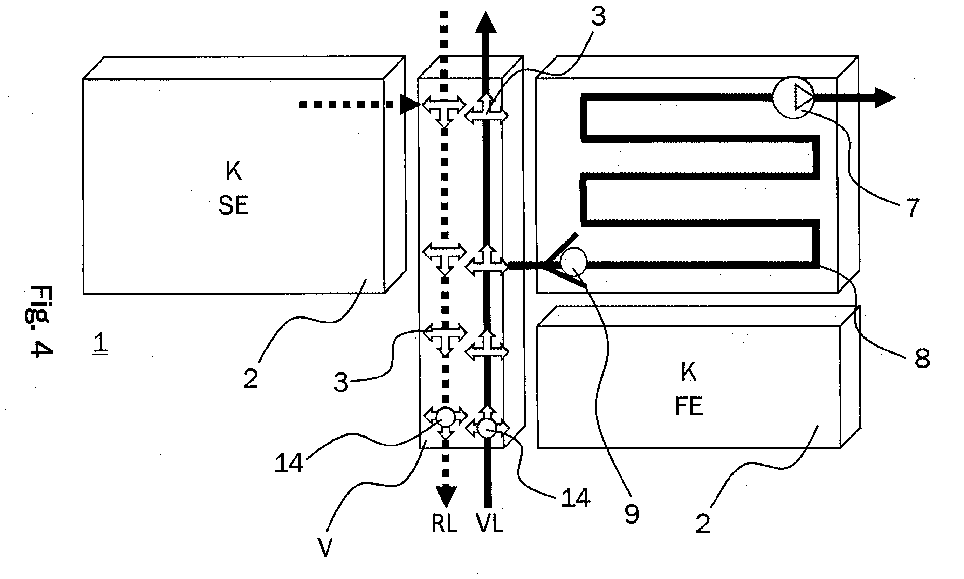

Ein Ausschnitt eines erfindungsgemäßen Systems 1 ist in Figur 4 dargestellt. Lediglich für eine übersichtlichere Darstellung sind die Module beabstandet voneinander gezeichnet. Figur 4 zeigt einen Detailausschnitt eines vertikalen Verteilermoduls V mit einer Vorlaufleitung VL (durchgezogenen Linie) und einer Rücklaufleitung RL (gestrichelte Linie) für ein fluides Trägermedium, das Wärme und/oder Kälte transportiert. Die Leitungen weisen jeweils schaltbare Dreiwege-Ventile 3 auf, mittels derer ein Zufließen beziehungsweise Abfließen des Trägermediums in beziehungsweise aus den Klimamodulen erreicht wird.

Ferner sind drei Klimamodule K in Figur 4 dargestellt. Über die Dreiwege-Ventile 3 kann eine über die Vorlaufleitung VL erfolgende Wärmezufuhr in die Heizkreise der verschiedenen Klimamodule K gesteuert beziehungsweise geschaltet werden. Beispielhaft illustriert wird als Heizkreis eines Klimamoduls K in der Sitzebene eine mäanderförmige Leitung 8. Nachdem ein fluides Trägermedium dem Mäander 8 über die Vorlaufleitung VL zugeführt wird, gibt das Trägermedium seine Wärme an die Oberfläche 2 ab und fließt über die Rücklaufleitung RL zurück zu einem Heizungskessel. Der Mäander 8 ist wärmeleitend mit der Oberfläche 2 des Klimamoduls verbunden. In dem Mäander 8 ist eine drehzahlsteuerbare Umwälzpumpe 7 angeordnet. Über die Drehzahl der Pumpe 7 kann ein Fluss des Trägermediums durch das Klimamodul K geregelt werden. Die Pumpe 7 empfängt hierzu Steuersignale von einer Steuereinrichtung. Ferner weist der Mäander ein Rückschlagventil 9 auf, welches ein Fließen des Trägermediums entgegen der vorgegebenen Fließrichtung verhindern kann.

Der dargestellt Mäander 8 des Klimamoduls K kann über geeignete hydraulische Kupplungen mit einem benachbarten Klimamodul K (nicht dargestellt) verbunden sein, so dass mehrere Klimamodule K in der Sitzebene SE durch das Verteilermodul V versorgt werden können. Alternativ kann der Mäander aber derart ausgeführt sein, dass er mit dem Rücklauf RL des Verteilermoduls strömungsverbunden ist, um den Kreislauf direkt zu schließen.

Weiterführend können in die Klimamodule K hinter oder auch auf der Oberfläche 2 Zusatzfunktionen wie Lautsprecher, Rauchmelder, C02-Sensoren, Helligkeitssensoren, Luftfeuchtesensoren, Wärmesensoren und/oder W-LAN-Router integriert werden. Ferner können weitere Infrastrukturen, wie zum Beispiel Netzwerkkabel, in den Verteilerelementen V verlegt werden. Auch können zum Beispiel Lichtschalter in den Verteilerelementen V angeordnet werden.

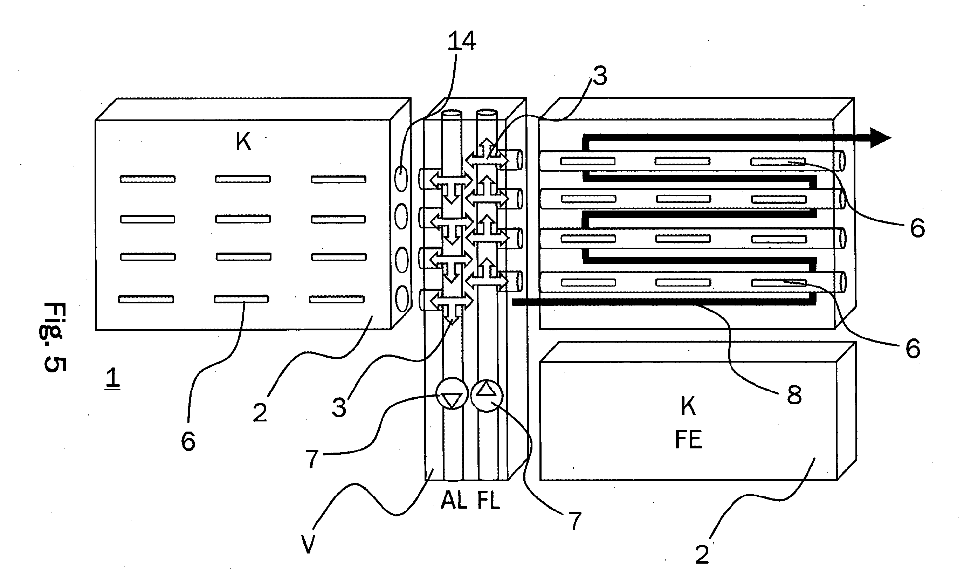

Ein weiterer Ausschnitt eines erfindungsgemäßen Systems 1 ist in Figur 5 dargestellt. Lediglich für eine übersichtlichere Darstellung sind die Module beabstandet voneinander gezeichnet. Die Figur 5 zeigt ein Verteilermodul V mit einer Frischluftzuleitung FL und einer Abluftleitung AL. Über die Frischluftzuleitung FL können die Klimamodule K mit Frischluft versorgt werden. Durch die Abluftleitung kann Luft, die über Öffnungen 6 in einem Klimamodul angesaugt wird, abgeführt werden. Die Klimamodule K des Ausführungsbeispiels können somit einen aktiven Luftaustausch der Raumluft realisieren. Über die Öffnungen 6 in der Oberfläche 2 kann die Frischluft in den Raum abgegeben werden. Über Dreiwege-Ventile 3 in der AbluftleitungAL und der Frischluftleitung FL in dem Verteilermodul V kann ein Zufluss beziehungsweise Abfluss von Luft geschaltet werden. Außerdem sind in der Abluftleitung AL und der Frischluftleitung FL jeweils Ventilatoren 7 angeordnet, die einen Luftstrom bewirken.

Die Lüftungsleitungen im Klimamodul K können derart angeordnet sein, dass die ausströmende Frischluft entlang einem in dem Klimamodul verlaufenden Mäander 8 eines Heiz- und/oder Kühlkreises austritt, so dass ein Wärmeaustausch zwischen dem in dem Mäander 8 fließenden Trägermedium und der Frischluft erfolgen kann. Ferner können auch in den Klimamodulen Ventilatoren angeordnet sein, um einen Umluftstrom beziehungsweise einen Luftstrom der Raumluft um die Heiz- und/oder Kühlkreise zu bewirken, so dass ein verbesserter Wärmeaustausch zwischen dem Trägermedium und der Raumluft bewirkt werden kann.

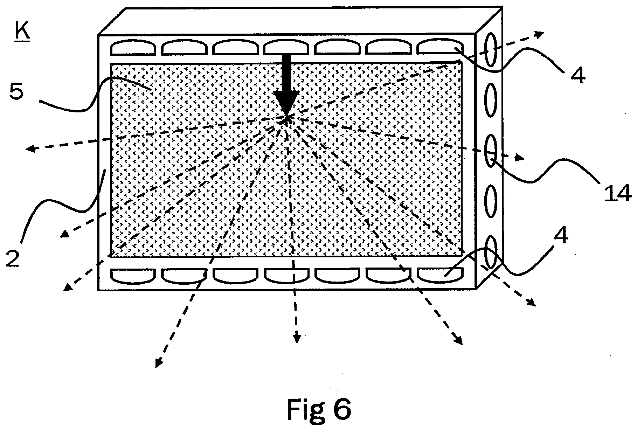

Fig. 6 zeigt ein Ausführungsbeispiel eines Klimamoduls K für ein erfindungsgemäßes System 1, das zum Beleuchten eines Raumes eine Vielzahl von Leuchtmitteln 4 aufweist, die an zwei Randbereichen der Oberfläche 2 angeordnet sind. Die Oberfläche 2 des Klimamoduls K weist eine Vielzahl von Streuzentren 5 auf, die durch Mikrostruktur-Verfahren in die Oberfläche 2 eingebracht sind. Die Oberfläche ist beispielsweise aus einem Aluminium-Blech gefertigt, das durch Ätzverfahren bearbeitet wurde, um die Vielzahl von Streuzentren 5 zu erzeugen.

Beispielhaft illustriert der dicke Pfeil einen von einem Leuchtmittel 4 abgegebenen Lichtstrahl der von der Vielzahl von Streuzentren 5 homogen in den Raum gestreut wird (gestrichelte Pfeile). Die Leuchtmittel 4 weisen jeweils rote, blaue, grüne und weiße LEDs auf. Das von den LEDs emittierte Licht wird durch Reflektoren auf die Oberfläche 2 des Klimamoduls K gerichtet. Eine geeignete Linsenkombination in den Leuchtmitteln 4 sorgt für eine homogene Ausleuchtung der Oberfläche 2. Eine Steuerelektronik, zum Beispiel in der Steuereinrichtung, steuert die Vielzahl der Leuchtmittel 4, um beispielsweise einen Farbverlauf, Farbwechsel, Helligkeit und weitere Parameter der Leuchtmittel 4 zu steuern. Die Leuchtmittel 4 sind thermisch von der Oberfläche 2 des Klimamoduls isoliert. Hierdurch kann die Lebensdauer der Leuchtmittel 4 verbessert werden.

Das Klimamodul K weist an seiner Seite außerdem eine Vielzahl von Kupplungen 14 auf, über die Heiz- und/oder Kühlkreisläufe in dem Klimamodul K mit hydraulischen Leitungen in einem Versorgungsmodul strömungsverbunden werden können.

Figur 7 zeigt eine Seitenansicht eines beispielhaften Klimamoduls K für ein erfindungsgemäßes System 1. Auf einer metallenen Oberfläche 2 des Klimamoduls K ist eine Vielzahl von Streuzentren 5 zum Streuen von Licht angeordnet (siehe auch Figur 6). Eine Rückseite des Klimamoduls K weist eine Thermoisolierung 12 auf. Hiermit kann das Klimamodul K thermisch gegenüber der Wand W isoliert werden, so dass ein Wärmeaustausch mit der Wand W vermindert und eine Wärmeabstrahlung in den Raum verbessert werden kann.

In der Wand W sind Wandhaken 10 angeordnet, die mit entsprechenden Befestigungsösen 11 in dem Klimamodul K kommunizieren, so dass eine lösbare Befestigung des Klimamoduls K an der Wand W bewirkt werden kann.

Das Gehäuse des Klimamoduls K soll möglichst gut wärmeleitfähig bei einem möglichst geringen Gewicht sein. Neben Aluminium oder dünnem Stahlblech können dafür auch Verbundmaterialien zum Einsatz kommen.

Figur 8 zeigt ein beheizbares und/oder kühlbares Bett 13, das nicht unter die Ansprüche fällt aber Teilaspekte der Klimamodule implementiert. Das Bett weist hierfür einen an der Unterseite des Betts 13 angeordneten mäanderförmigen Heiz- und/oder Kühlkreislauf 8 auf. Über eine drehzahlgesteuerte Pumpe 7 im Heiz- und/oder Kühlkreislauf 8 kann ein Fluss eines fluiden Trägermediums geregelt werden. Alternativ zu dem am Bett 13 angeordneten Heiz- und/oder Kühlkreislauf 8 kann auch ein Klimamodul 8 unter dem Bett 13 angeordnet werden. Das Klimamodul K weist eine Zuleitung 15 mit einer drehzahlgesteuerten Pumpe 7 auf. Die Zuleitung 15 kann über eine geeignete hydraulische Kupplung 14 mit einer Kupplung 14 in einem Verteilermodul strömungsverbunden werden.

Ein weiteres beheizbares und/oder kühlbares Möbel, das nicht unter die Ansprüche fällt aber Teilaspekte der Klimamodule implementiert, zeigt die Figur 9. Hier ist ein Arbeitsplatz mit einem Stuhl 16 und einem Tisch 17 dargestellt. Der Tisch 17 und der Stuhl 16 weisen, ähnlich wie das Bett 13 aus Figur 8, Heiz- und/oder Kühlkreisläufe 8 auf, die über geeignete Zuleitungen 15 mit dem hydraulischen Trägermedium versorgt werden können.

Die einzelnen Heiz- und/oder Kühlkreisläufe 8 können entweder jeweils separat mit Verteilermodulen V verbunden werden oder über in dem Möbel integrierte Verteilermodule V miteinander in Serie geschaltet sein. Eine Pumpe 7 in dem beheizbaren und/oder kühlbaren Arbeitsplatz 16, 17 regelt den Fluss des Trägermediums.

Die Erfindung wird durch die Ansprüche definiert.

### Bezugszeichenliste

- 1: System zum Heizen und/oder Kühlen und/oder Belüften und/oder Beleuchten
- 2: Oberfläche
- 3: Drei-Wege-Ventil
- 4: Leuchtmittel
- 5: Streuzentren
- 6: Öffnungen
- 7: Umwälzpumpe bzw. drehzahlgeregelter Lüfter
- 8: Mäander
- 9: Rückschlagventil
- 10: Wandhaken
- 11: Befestigungsöse
- 12: Thermoisolierung
- 13: Bett
- 14: (Hydraulische) Kupplung
- 15: Zuleitung
- 16: Stuhl
- 17: Tisch
- VL: Vorlauf
- RL: Rücklauf
- FL: Frischluftzuleitung
- AL: Abluftleitung
- K: Klimamodul
- FE: Fußebene
- SE: Sitzebene
- KE: Kopfebene
- W: Wand
- D: Decke

## Patentansprüche

1. System (1) zum Beleuchten und zum Heizen und/oder Kühlen und/oder Belüften eines Raumes, umfassend:
eine Vielzahl von Klimamodulen (K), wobei das Klimamodul (K) eine ebene Oberfläche (2) aufweist, die dafür ausgelegt ist, Licht und Wärme und/oder Kälte an den Raum abzugeben;
mindestens ein Verteilermodul (V), das dafür ausgelegt ist, der Vielzahl von Klimamodulen (K) das fluide Trägermedium für Wärme und/oder Kälte und/oder Frischluft bereitzustellen; und
eine Steuereinrichtung zum Steuern einer Wärmemenge und/oder Kältemenge und/oder Frischluftmenge, wobei:
die Kontur der Vielzahl von Klimamodulen (K) und des mindestens einen Verteilermoduls (V) derart ausgebildet ist, dass die Vielzahl von Klimamodulen (K) und das mindestens eine Verteilermodul (V) durch Zusammensetzen eine im Wesentlichen ebene und zusammenhängende Oberfläche bilden; und
die Oberflächen (2) der Klimamodule (K) jeweils eine Vielzahl von Streuzentren (5) zum Streuen von Licht aufweisen, wobei das Licht von Leuchtmitteln (4) emittiert wird, die an einem Randbereich der Oberfläche (2) oder mittig auf der Oberfläche (2) angeordnet sind,
wobei
jedes Klimamodul (K) hydraulische Heizkreise und/oder Kühlkreise für ein fluides Trägermedium zum Bereitstellen von Wärme und/oder Kälte aufweist,
jedes Klimamodul (K) separat über regelbare Ventile (3) mit mindestens einem Verteilermodul (V) verbunden ist und die Steuereinrichtung eingerichtet ist, jedes der regelbaren Ventile (3) separat zu regeln, so dass die Wärmemenge und/oder Kältemenge und/oder Frischluftmenge für jedes der Vielzahl von Klimamodulen (K) separat regelbar ist, wobei das mindestens eine Verteilermodul (V) die Vielzahl regelbarer Ventile (3) aufweist,
die Heizkreise und/oder Kühlkreise mit der Oberfläche (2) der Klimamodule (K) in Wärmekontakt stehen für einen Wärmeübertrag zwischen dem fluiden Trägermedium und der Oberfläche (2), und
die Streuzentren (5) als Mikroprismen, Mikroprismen-Arrays, Mikrolinsen und/oder Mikrolinsen-Arrays in oder auf der Oberfläche (2) ausgebildet sind, die ein diffuses Streuen des von den Leuchtmitteln (4) emittierten Lichts in den Raum hinein bewirken.

2. System (1) nach Anspruch 1, wobei die Oberflächen (2) der Klimamodule (K) jeweils eine Vielzahl von Öffnungen (6) zum Abgeben von Frischluft an den Raum aufweisen.

3. System (1) nach Anspruch 1 oder 2, wobei jedes Klimamodul eine Einrichtung (7) zum Regeln eines Flusses des fluiden Trägermediums und/oder zum Regeln eines Flusses von Frischluft durch das Klimamodul (K) aufweist.

4. System (1) nach mindestens einem der vorhergehenden Ansprüche, wobei die Klimamodule (K) dafür ausgelegt sind, lösbar an der mindestens einen Wand (W) und/oder Decke (D) und/oder am Boden des Raumes angeordnet zu werden, so dass die Anordnung der Klimamodule (K) veränderbar ist.

5. System (1) nach mindestens einem der vorhergehenden Ansprüche, wobei das mindestens eine Verteilermodul (V) hydraulische Kupplungen (14) aufweist, über die eine lösbare Verbindung zu den Klimamodulen (K) und/oder hydraulischen Möbeln (14, 16, 17) hergestellt werden kann, um die Klimamodule (K) mit dem fluiden Trägermedium für Wärme und/oder Kälte und/oder Frischluft zu versorgen.

6. System (1) nach Anspruch 1, wobei die Leuchtmittel (4) Leuchtdioden sind, die rotes und/oder blaues und/oder grünes und/oder weißes Licht abgeben.

7. System (1) nach Anspruch 1 oder 6, wobei die Leuchtmittel (4) Prismen und/oder Linsen aufweisen, um das von ihnen emittierte Licht unter einem Winkel von weniger als 20 Grad zur Oberfläche (2) eines Klimamoduls (K) auf die Streuzentren (5) der Oberfläche (2) abzulenken.

8. System (1) nach mindestens einem der vorhergehenden Ansprüche, wobei die Oberfläche (2) der Klimamodule (K) aus einem Material mit einem Wärmeleitkoeffizienten von mindestens 50 W/(m K) besteht.

9. System (1) nach mindestens einem der vorhergehenden Ansprüche, wobei das mindestens eine Verteilermodul (V) mindestens eine Einrichtung (7) zum Regeln eines Flusses des fluiden Trägermediums und/oder zum Regeln eines Flusses der Frischluft durch das Verteilermodul (V) aufweist.

## Claims

1. A system (1) for illuminating and for heating and/or cooling and/or ventilating and a room, comprising:
a plurality of air-conditioning modules (K) having a flat surface (2), which is arranged to discharge light and heat and/or cold to the room;
at least one distribution module (V) which is arranged to provide the plurality of air-conditioning modules (K) with a fluid carrier medium for heat and/or cold and/or fresh air; and
a control device for controlling a quantity of heat and/or cold and/or fresh air; wherein
the contours of the plurality of air-conditioning modules (K) and the at least one distribution module (V) are arranged in such a way that the plurality of air-conditioning modules (K) and the at least one distribution module (V) form, by virtue of their assembly, a substantially flat and continuous surface, and
the surfaces (2) of the plurality of air-conditioning modules (K) each has a plurality of scattering centers (5) for scattering light, wherein
the light is emitted by lighting means (4), which are arranged in an edge region of the surface (2) or in the middle of the surface (2), wherein
each air-conditioning module (K) comprises hydraulic heating circuits and/or cooling circuits for a fluid carrier medium for providing heat and/or cold,
each of the plurality of air-conditioning modules (K) is connected separately to at least one distribution module (V) via a controllable valve (3), and the control device is configured to separately control each of the controllable valves (3) so that the quantity of heat and/or cold and/or fresh air is separately controllable for each of the plurality of air conditioning modules (K), wherein
the at least one distribution module (V) comprises said plurality of controllable valves (3),
the heating and/or cooling circuits are in thermal contact with the surface (2) of the air-conditioning modules (K) for a heat transfer between the fluid carrier medium and the surface (2), and
the scattering centers are arranged as microprisms, microprism arrays, microlenses and/or microlens arrays arranged on or in the surface (2), which cause diffuse scattering of the light emitted by the lighting means (4) into the room.

2. The system (1) according to claim 1, wherein
the surfaces (2) of the plurality of air-conditioning modules (K) each has a plurality of openings (6) for discharging fresh air to the room.

3. The system (1) according to claim 1 or 2, wherein
each air-conditioning module has a device (7) for controlling a flow of the fluid carrier medium and/or for controlling a flow of the fresh air through the air-conditioning module (K).

4. The system (1) according to at least one of the preceding claims, wherein
the air-conditioning modules (K) are formed to be arranged in a detachable manner on the at least one wall (W) and/or ceiling (D) and/or floor of the room so that the arrangement of the air-conditioning modules (K) is changeable.

5. The system (1) according to at least one of the preceding claims, wherein
the at least one distribution module (V) has hydraulic couplers (14) by means of which a detachable connection to the air-conditioning modules (K) and/or hydraulic furniture (14, 16, 17) is established to supply the air-conditioning modules (K) with the fluid carrier medium for heat and/or cold and/or fresh air.

6. The system (1) according to claim 1, wherein
the lighting means (4) are light emitting diodes which emit red and/or blue and/or green and/or white light.

7. The system (1) according to claims 1 or 6, wherein
the lighting means (4) have prisms and/or lenses to deflect the light emitted by them at an angle of less than 20 degrees in relation to the surface (2) of an air-conditioning module (K) to the scattering centers of the surface (2).

8. The system (1) according to at least one of the preceding claims, wherein
the surface (2) of the air-conditioning module (K) consists of a material having a heat conduction coefficient of at least 50 W/(m K).

9. The system (1) according to at least one of the preceding claims, wherein
the at least one distribution module (V) has at least one device (7) for controlling a flow of the fluid carrier medium and/or for controlling a flow of the fresh air through the distribution module (V).

## Revendications

1. Système (1) d'éclairage et de chauffage et/ou de refroidissement et/ou de ventilation d'un espace, comprenant :
une pluralité de modules de climatisation (K), dans lequel le module de climatisation (K) présente une surface plane (2) qui est conçue pour délivrer de la lumière et de la chaleur et/ou du froid dans l'espace ;
au moins un module de distribution (V) qui est conçu pour fournir à la pluralité de modules de climatisation (K) le milieu porteur fluide pour de la chaleur et/ou du froid et/ou de l'air frais ; et
un dispositif de commande pour commander une quantité de chaleur et/ou une quantité de froid et/ou une quantité d'air frais, dans lequel :
le contour de la pluralité de modules de climatisation (K) et de l'au moins un module de distribution (V) est réalisé de telle sorte que la pluralité de modules de climatisation (K) et l'au moins un module de distribution (V) forment par assemblage une surface sensiblement plane et continue ; et
les surfaces (2) des modules de climatisation (K) présentent respectivement une pluralité de centres de diffusion (5) pour diffuser de la lumière, dans lequel la lumière est émise par des moyens d'éclairage (4) qui sont disposés au niveau d'une région de bord de la surface (2) ou au centre sur la surface (2),
dans lequel
chaque module de climatisation (K) présente des circuits de chauffage et/ou des circuits de refroidissement hydrauliques pour un milieu porteur fluide pour fournir de la chaleur et/ou du froid,
chaque module de climatisation (K) est connecté séparément par le biais de soupapes réglables (3) à au moins un module de distribution (V) et le dispositif de commande est conçu pour régler séparément chacune des soupapes réglables (3) de sorte que la quantité de chaleur et/ou la quantité de froid et/ou la quantité d'air frais pour chacun de la pluralité de modules de climatisation (K) puisse être réglée séparément, dans lequel l'au moins un module de distribution (V) présente la pluralité de soupapes réglables (3),
les circuits de chauffage et/ou les circuits de refroidissement sont en contact thermique avec la surface (2) des modules de climatisation (K) pour un transfert de chaleur entre le milieu porteur fluide et la surface (2), et
les centres de diffusion (5) sont réalisés sous forme de microprismes, de réseaux de microprismes, de microlentilles et/ou de réseaux de microlentilles dans ou sur la surface (2), qui provoquent une diffusion diffuse de la lumière émise par les moyens d'éclairage (4) dans l'espace.

2. Système (1) selon la revendication 1, dans lequel les surfaces (2) des modules de climatisation (K) présentent respectivement une pluralité d'ouvertures (6) pour délivrer de l'air frais dans l'espace.

3. Système (1) selon la revendication 1 ou 2, dans lequel chaque module de climatisation présente un dispositif (7) pour régler un flux du milieu porteur fluide et/ou pour régler un flux d'air frais à travers le module de climatisation (K).

4. Système (1) selon au moins l'une quelconque des revendications précédentes, dans lequel les modules de climatisation (K) sont conçus pour être disposés de manière amovible sur l'au moins un mur (W) et/ou plafond (D) et/ou au fond de l'espace, de sorte que l'agencement des modules de climatisation (K) peut être modifié.

5. Système (1) selon au moins l'une quelconque des revendications précédentes, dans lequel l'au moins un module de distribution (V) présente des accouplements hydrauliques (14), par le biais desquels une connexion amovible aux modules de climatisation (K) et/ou aux meubles hydrauliques (14, 16, 17) peut être établie, afin d'alimenter les modules de climatisation (K) avec le milieu porteur fluide pour de la chaleur et/ou du froid et/ou de l'air frais.

6. Système (1) selon la revendication 1, dans lequel les moyens d'éclairage (4) sont des diodes électroluminescentes qui émettent de la lumière rouge et/ou bleue et/ou verte et/ou blanche.

7. Système (1) selon la revendication 1 ou 6, dans lequel les moyens d'éclairage (4) présentent des prismes et/ou des lentilles, afin de dévier la lumière émise par ceux-ci selon un angle de moins de 20 degrés par rapport à la surface (2) d'un module de climatisation (K) sur les centres de diffusion (5) de la surface (2).

8. Système (1) selon au moins l'une quelconque des revendications précédentes, dans lequel la surface (2) des modules de climatisation (K) se compose d'un matériau présentant un coefficient de conductivité thermique d'au moins 50 W/(m K).

9. Système (1) selon au moins l'une quelconque des revendications précédentes, dans lequel l'au moins un module de distribution (V) présente au moins un dispositif (7) pour régler un flux du milieu porteur fluide et/ou pour régler un flux de l'air frais à travers le module de distribution (V).
